# EUROPEAN PATENT SPECIFICATION

(11) **EP 4 460 032 B1**
(45) Date of publication and mention of the grant of the patent: **02.07.2025**
(21) Application number: 23171869.3
(22) Date of filing: 05.05.2023
(51) Int. Cl.: H04W 4/38, H04L 67/12, G01S 7/00, G01S 13/00, G01S 13/76, H04W 4/029

(54) **METHOD FOR PROVIDING A SENSING-RELATED SERVICE BY A SENSING EDGE SERVER**
VERFAHREN ZUM BEREITSTELLEN EINES SENSING-RELEVANTEN DIENSTES DURCH EINEN SENSING-EDGE-SERVER
PROCÉDÉ POUR FOURNIR UN SERVICE LIÉ À LA DÉTECTION PAR UN SERVEUR DE PÉRIPHÉRIE DE DÉTECTION

(43) Date of publication of application: 06.11.2024
(73) Proprietor: Deutsche Telekom AG, 53113 Bonn (DE)
(72) Inventor: KADELKA, Arndt, 50933 Cologne (DE)
(74) Representative: Schwöbel, Thilo K.

(56) References cited:
- EP-A1- 4 047 963
- WO-A1-2022/081624
- GUANGXU ZHU ET AL: "Pushing AI to Wireless Network Edge: An Overview on Integrated Sensing, Communication, and Computation towards 6G", ARXIV.ORG, CORNELL UNIVERSITY LIBRARY, 201 OLIN LIBRARY CORNELL UNIVERSITY ITHACA, NY 14853, 4 November 2022 (2022-11-04), XP091360709

## Description

### BACKGROUND

The present invention relates a method for providing at least one sensing-related service by means of processing sensing-related data that is generated within or as part of a mobile communication network, wherein the mobile communication network comprises at least a first sensing-capable or sensing-enabled entity or functionality and a second sensing-capable or sensing-enabled entity or functionality, and wherein the mobile communication network comprises or is associated or assigned to at least one sensing edge server and at least one sensing application server, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality, wherein by means of the radiofrequency sensing reception signal information about the environment of the first and/or second sensing-capable or sensing-enabled entities or functionalities is able to be gathered as first stage sensing inference data.

Furthermore, the present invention relates to a system or a mobile communication network for providing at least one sensing-related service by means of processing sensing-related data that is generated within or as part of a mobile communication network, wherein the mobile communication network comprises at least a first sensing-capable or sensing-enabled entity or functionality and a second sensing-capable or sensing-enabled entity or functionality, and wherein the mobile communication network comprises or is associated or assigned to at least one sensing edge server and at least one sensing application server, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality, wherein by means of the radiofrequency sensing reception signal information about the environment of the first and/or second sensing-capable or sensing-enabled entities or functionalities is able to be gathered as first stage sensing inference data.

Additionally, the present invention relates to a sensing edge server or to a sensing application server or to a sensing-capable or sensing-enabled entity or functionality, especially as part of an inventive system or an inventive mobile communication network, for providing at least one sensing-related service by means of processing sensing-related data that is generated within or as part of a mobile communication network.

Furthermore, the present invention relates to a program and to a computer-readable medium for providing at least one sensing-related service by means of processing sensing-related data that is generated within or as part of a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

Wireless sensing technologies have originated from the most widely used sensing technology known as radar (radio detection and ranging), where radio waves are exploited to determine distance, angle, or instantaneous velocity of objects. Nowadays, this principle is exploited for example by lidar (light detection and ranging) systems that are capable of obtaining an image of the environment around a sensor. A lidar system may be either a stand-alone device or integrated in a mobile device or a vehicle.

By means of realizing sensing capabilities in or as part of mobile communication networks, primarily by means of one or a plurality of sensing-capable or sensing-enabled entities or functionalities that are generating and transmitting radiofrequency sensing signals, it is possible to obtain information regarding either transmission channel properties between different stations, especially base station entities or user equipments, and/or regarding objects from where such radiofrequency sensing signals are reflected. Such a sensing system is e. g. set out in WO 2022/081624 A1.

Even though such sensing capabilities are able to procure further information regarding transmission channels and/or objects, especially moving objects, nearby or in the vicinity of the respective sensing-capable or sensing-enabled entities or functionalities, mobile radio technologies (mobile radio access technologies) and radar have developed over decades more or less independently. However, lately the convergence of both technologies is increasing: Future advances in mobile communications (5G Advanced and 6G) anticipate that advanced radio sensing functions will become important services of mobile broadband (radio) networks. Joint communication and sensing (JCaS) will address a combined radio interface serving both, communication and sensing. Sensing in 6G is considered in an even broader range, especially referring to the ability of devices (e.g. base station entities or user equipments) to detect and gather information about the environment around them. This could include using advanced sensor technologies to gather information about the physical world, or using machine learning algorithms to analyze data from one or multiple sensors in real-time. Furthermore, for 6G, integrated communication and sensing (ICaS) is considered that improves the ICaS concept by providing common waveforms and other radio functions. An initial step for the introduction of sensing is currently under preparation for 3GPP Rel-19, providing sensing functionalities on top of 5G radio for identified use cases.

Typically, wireless sensing technologies are applied in stand-alone systems that are designed for dedicated applications and use cases, e.g. autonomous driving, and a lot of research and development work has been conducted to develop methods and algorithms for problems arising in connection with these specific applications or use cases. In contrast to these rather specific sensing applications, sensing in cellular mobile broadband networks typically needs to serve diverse use cases.

### SUMMARY

An object of the present invention is to provide a technically simple, effective and cost-effective solution for providing at least one sensing-related service by means of processing sensing-related data that is generated within or as part of a mobile communication network, wherein the mobile communication network comprises at least a first sensing-capable or sensing-enabled entity or functionality and a second sensing-capable or sensing-enabled entity or functionality, and wherein the mobile communication network comprises or is associated or assigned to at least one sensing edge server and at least one sensing application server, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality, wherein by means of the radiofrequency sensing reception signal information about the environment of the first and/or second sensing-capable or sensing-enabled entities or functionalities is able to be gathered as first stage sensing inference data, wherein a more general applicability and less use case-specific or application-specific usage of the sensing inference data is possible. A further object of the present invention is to provide a corresponding system or mobile communication network, a corresponding sensing edge server or a corresponding sensing application server or a corresponding sensing-capable or sensing-enabled entity or functionality, and a corresponding program and computer-readable medium.

The object of the present invention is achieved by a method for providing at least one sensing-related service by means of processing sensing-related data that is generated within or as part of a mobile communication network,
wherein the mobile communication network comprises at least a first sensing-capable or sensing-enabled entity or functionality and a second sensing-capable or sensing-enabled entity or functionality, and wherein the mobile communication network comprises or is associated or assigned to at least one sensing edge server and at least one sensing application server,
wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered as first stage sensing inference data, wherein the first stage sensing inference data are provided to the at least one sensing edge server for generating second stage sensing inference data, and wherein the second stage sensing inference data are provided to the at least one sensing application server for providing sensing-related
services and/or generating sensing application data,
wherein, in order to provide at least one sensing-related service, the method comprises the following steps:
   -- in a first step, the at least one sensing edge server receives, from the at least one sensing application server, a request message regarding the at least one sensing-related service,
   -- in a second step, the at least one sensing edge server transmits, to the at least one sensing application server, a response message regarding the at least one sensing-related service, wherein the response message comprises, as its response content, an acknowledgement or a rejection or a modification of the requested sensing-related service.

It is thereby advantageously possible according to the present invention to be able to more efficiently use the network resources of the mobile communication network: While in ICaS-enabled mobile broadband networks, sensing-as-a-service is able to be provided, since common resources and network functions are shared between communication and sensing, it cannot be anticipated - or assured - that the requested sensing service(s) is(are) continuously maintained at their highest possible service level in the entire cellular network (as might be known from stand-alone (sensing) applications conventionally known; as sensing-as-a-service in ICaS is rather provided on demand, serving this application demand needs to respect the application requirements as well as the resource consumption in an ICaS-enabled mobile broadband network.

Integrated communication and sensing, ICaS, base station entities and user equipments (i.e. sensing-capable or sensing-enabled entities or functionalities) have to serve both, communication and sensing. Due to the extra processing needs to infer by these sensing features and applications, it is advantageously possible according to the present invention that especially base station entities - but also user equipments - are relaxed from these application-driven tasks. In this sense, it is proposed, according to the present invention, to split the sensing inference accordingly, and to apply, or to provide for, a cascading of data inference from integrated communication and sensing in cellular mobile broadband networks.

According to the present invention, at least one sensing-related service is able to be provided, by means of processing sensing-related data that is generated within a mobile communication network, i.e. wherein at least a part or parts of the mobile communication network help to generate such sensing-related data.

According to the present invention, this is able to be realized by means of at least a first sensing-capable or sensing-enabled entity or functionality and a second sensing-capable or sensing-enabled entity or functionality. These sensing-capable or sensing-enabled entities or functionalities are typically base station entities that are used, within or as part of the mobile communication network, for communication purposes, i.e. in order to provide communication services to user equipments. However, also user equipments might be used, or participate, according to the present invention, in generating sensing-related data; hence, sensing-capable or sensing-enabled entities or functionalities might also correspond to user equipments.

Furthermore, the mobile communication network comprises or is associated or assigned to at least one sensing edge server and at least one sensing application server. Thereby, it is especially and advantageously possible, according to the present invention, to provide for a cascading of data inference from integrated communication and sensing in cellular mobile broadband networks. Hence, in contrast to the rather specific conventionally known sensing applications, applying sensing in cellular mobile broadband networks according to the present invention advantageously provides the possibility to serve diverse use cases, and, additionally or cumulatively, apply a service-oriented architecture such as used in mobile broadband (cellular) networks. Hence, according to the present invention, instead of optimizing and aggregating sensing (raw) data for specific use cases and/or stand-alone applications, it is advantageously possible to provide sensing services in mobile broadband (cellular) networks that provide functions and internal services that serve multiple - and diverse - use cases whilst building on a cellular system architecture. According to the present invention, it is advantageously possible to serve various application demands, which is a benefit due to the large variety of potential sensing use cases.

With regard to positioning, it is to be understood that in this respect, integrated communication and sensing (ICaS) significantly differs from positioning in mobile broadband networks, as the sensing targets are not actively involved in the inference process; hence, algorithms defined for positioning cannot be applied to sensing, and - while, in principle, every object in the environment can be a sensing target (i.e. a sensed object) - in case of positioning, targets are defined only by the positioning capabilities of the co-located user equipments. Furthermore, a sensing object can be defined by much more features than only the location information (as it is the case of positioning). Furthermore, user equipment detection/identification/tracking are inherently part of a positioning solution (since user equipments are "known" to the system); however, in a sensing approach, this information is not given a priori, it is typically needed to be "learned" from the measured data.

According to the present invention, sensing relates to obtaining information regarding the environment of such a sensing-capable or sensing-enabled entity or functionality by means of using (and analyzing) incoming radiofrequency signals (sensing reception signals) that are the result of the interactions (especially reflections) of previously transmitted radiofrequency signals (sensing signals) with the environment (e.g. objects having the capability to reflect radiofrequency signals) of the sensing-capable or sensing-enabled entity or functionality, wherein the previously transmitted radiofrequency signals (sensing signals) could either be radiofrequency signals having been transmitted by the same sensing-capable or sensing-enabled entity or functionality, or radiofrequency signals (sensing signals) having been transmitted by another sensing-capable or sensing-enabled entity or functionality, or both. Hence, the at least one sensing-capable or sensing-enabled entity or functionality transmits a radiofrequency sensing signal, wherein, as a result of the radiofrequency sensing signal being transmitted, a radiofrequency sensing reception signal is received by either the (same) first sensing-capable or sensing-enabled entity or functionality or the second sensing-capable or sensing-enabled entity or functionality (or by both of them). By means of the radiofrequency sensing reception signal (or plurality of such sensing reception signals) - information is able to be gathered (especially by means of at least initially processing such sensing reception signal(s)) about the environment of the first and/or second sensing-capable or sensing-enabled entities or functionalities; in the context of the present invention, such information is referred to as first stage sensing inference data. The first stage sensing inference data are provided to the at least one sensing edge server for generating second stage sensing inference data, and the second stage sensing inference data are provided to the at least one sensing application server for providing sensing-related services and/or generating sensing application data. Hence, according to the present invention, in order to provide at least one sensing-related service, the method comprises the steps of:
-- in a first step, the at least one sensing edge server receives, from the at least one sensing application server, a request message regarding the at least one sensing-related service,
-- in a second step, the at least one sensing edge server transmits, to the at least one sensing application server, a response message regarding the at least one sensing-related service, wherein the response message comprises, as its response content, an acknowledgement or a rejection or a modification of the requested sensing-related service.

According to the present invention, it is advantageously possible and preferred that - after the response message regarding the at least one sensing-related service has been transmitted, in the second step and by the at least one sensing edge server - the at least one sensing edge server transmits, to the at least one sensing application server, at least one further response message regarding the at least one sensing-related service, wherein the further response message comprises a different response content compared to the response message.

It is thereby advantageously possible to easily and effectively implement the inventive method.

According to the present invention, it is furthermore advantageously possible and preferred that the request message regarding the at least one sensing-related service, received by the sensing edge server from the at least one sensing application server, comprises at least one out of the following:
-- a sensing area selection,
-- a sensing quality indication,
-- a selection of the sensing-capable or sensing-enabled entities or functionalities,
-- an object determination notification,
-- a tracking indication regarding identified objects,
-- an update and/or a re-negotiation regarding sensing parameters.

It is thereby advantageously possible to easily and effectively implement the inventive method.

According to the present invention, it is furthermore advantageously possible and preferred that the request message regarding the at least one sensing-related service and/or the response message and/or the further response message regarding the at least one sensing-related service relates to or realizes application-driven tasks that are performed by the sensing edge server, especially requested by the sensing application server and/or driven by changes, capabilities or demands in the radio environment and/or in the environment of the sensing-capable or sensing-enabled entities or functionalities, wherein especially the application-driven tasks that are performed by the sensing edge server comprise at least one out of the following:
-- the sensing edge server maintains an active directory of sensing information with regard to request messages received by the at least one sensing application server, especially relating to at least one out of the following: the selected sensing area selection, the selected sensing quality indication, a selected type of notification, and the selected tracking indication regarding identified objects,
-- the sensing edge server maintains an active directory of capabilities of the sensing-capable or sensing-enabled entities or functionalities and their sensing environment, especially the covered sensing areas and/or the current sensing capabilities,
-- the sensing edge server adapts sensing information from related sensing-capable or sensing-enabled entities or functionalities according to agreed demands of sensing application server,
-- the sensing edge server performs sensing area selection and/or a selection of the sensing-capable or sensing-enabled entities or functionalities and/or a sensing quality selection and/or re-negotiation and update of sensing parameters,
-- the sensing edge server - or another network node of the mobile communication network to which the sensing edge server is connected or that the sensing edge server is able to access - considers sensing resources demand versus communication resources demand, and especially controls resources of the mobile communication network used for sensing in view of available network resources and in view of communication resources demand.

It is thereby advantageously possible to easily and effectively implement the inventive method.

Furthermore, it is advantageously possible and preferred according to the present invention that the first stage sensing inference data comprise at least one out of the following:
-- radar-like images, especially in a relative coordinate system,
-- elements with significant sensing information,
-- further information available during local analysis at the first and second sensing-capable or sensing-enabled entities or functionalities, especially velocity indications, especially inferred from doppler measurements, range resolution, angular resolution, channel observations,
-- time-sequencing of static images, especially time-stamped image streams, especially of radar-like images,
-- a vector of features regarding at least a part of the radar-like images, the vector of features especially comprising data regarding
   -- the intensity of the received signal,
   -- the relative velocity derived from doppler measurements and/or
   -- a self-assessment information regarding one or a plurality of the inferred properties based on the respective sensing-capable or sensing-enabled entity or functionality, wherein especially the sensing edge server performs both a first inference step and a second inference step, wherein the second stage sensing inference data correspond to

the result of the second inference step,
wherein especially, the first inference step involves transforming the sensing inference data into a general coordinate system or in an absolute coordinate system, especially transformed from local information into the general coordinate system or into the absolute coordinate system,
wherein especially, the second inference step involves the sensing edge server identifying objects and providing object information, especially defined data on object level, especially in a defined format, preferably using JavaScript Object Notation, JSON.

It is thereby advantageously possible to easily and effectively implement the inventive method.

Furthermore, it is advantageously possible and preferred according to the present invention that the second stage sensing inference data are transmitted, by the sensing edge server, and received, by the sensing application server,
involving an application programming interface, especially according to at least one out of the following:
-- a representational state transfer, REST, application programming interface, especially in case that the sensing edge server requests one-time sensing information from the sensing-capable or sensing-enabled entities or functionalities,
-- a publication-subscription application programming interface, especially using WebSocket, MQ telemetry transport, MQTT, especially in case that the sensing edge server and the sensing-capable or sensing-enabled entities or functionalities communicate according to the periodic mode operation,
-- a stream-based application programming interface, especially in case that the sensing edge server and the sensing-capable or sensing-enabled entities or functionalities communicate according to the continuous mode operation.

It is thereby advantageously possible to easily and effectively implement the inventive method.

Furthermore, the present invention relates to a system or to a mobile communication network for providing at least one sensing-related service by means of processing sensing-related data that is generated within or as part of a mobile communication network,
wherein the mobile communication network comprises at least a first sensing-capable or sensing-enabled entity or functionality and a second sensing-capable or sensing-enabled entity or functionality, and wherein the mobile communication network comprises or is associated or assigned to at least one sensing edge server and at least one sensing
application server,
wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered as first stage sensing inference data,
wherein the first stage sensing inference data are provided to the at least one sensing edge server for generating second stage sensing inference data, and wherein the second stage sensing inference data are provided to the at least one sensing application server for providing sensing-related services and/or generating sensing application data, wherein, in order to provide at least one sensing-related service, the system or mobile communication network is configured such that:
   -- the at least one sensing edge server receives, from the at least one sensing application server, a request message regarding the at least one sensing-related service,
   -- the at least one sensing edge server transmits, to the at least one sensing application server, a response message regarding the at least one sensing-related service, wherein the response message comprises, as its response content, an acknowledgement or a rejection or a modification of the requested sensing-related service.

Furthermore, the present invention relates to a sensing edge server or to a sensing application server or to a sensing-capable or sensing-enabled entity or functionality, especially as part of an inventive system or an inventive mobile communication network, for providing at least one sensing-related service by means of processing sensing-related data that is generated within or as part of a mobile communication network,
wherein the sensing edge server and/or the sensing application server communicate, at least indirectly, with at least the sensing-capable or sensing-enabled entity or functionality, wherein the sensing-capable or sensing-enabled entity or functionality gathers information about its environment as first stage sensing inference data,
wherein, in order to provide at least one sensing-related service, the sensing edge server and/or the sensing application server and/or the sensing-capable or sensing-enabled entity or functionality is configured such that:
   -- the at least one sensing edge server receives, from the at least one sensing application server, a request message regarding the at least one sensing-related service,
   -- the at least one sensing edge server transmits, to the at least one sensing application server, a response message regarding the at least one sensing-related service, wherein the response message comprises, as its response content, an acknowledgement or a rejection or a modification of the requested sensing-related service.

Additionally, the present invention relates to a sensing edge server or sensing application server or sensing-capable or sensing-enabled entity or functionality, especially as part of an inventive system or an inventive mobile communication network.

Additionally, the present invention relates to a program comprising a computer readable program code, which, when executed on a computer and/or on a sensing-capable or sensing-enabled entity or functionality and/or on a sensing edge server and/or on a sensing application server, or in part on a sensing-capable or sensing-enabled entity or functionality and/or in part on a sensing edge server and/or in part on a sensing application server, causes the computer and/or the sensing-capable or sensing-enabled entity or functionality and/or the sensing edge server and/or the sensing application server to perform an inventive method.

Additionally, the present invention relates to a computer-readable medium comprising instructions which when executed on a computer and/or on a sensing-capable or sensing-enabled entity or functionality and/or on a sensing edge server and/or on a sensing application server, or in part on a sensing-capable or sensing-enabled entity or functionality and/or in part on a sensing edge server and/or in part on a sensing application server, causes the computer and/or the sensing-capable or sensing-enabled entity or functionality and/or the sensing edge server and/or the sensing application server to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

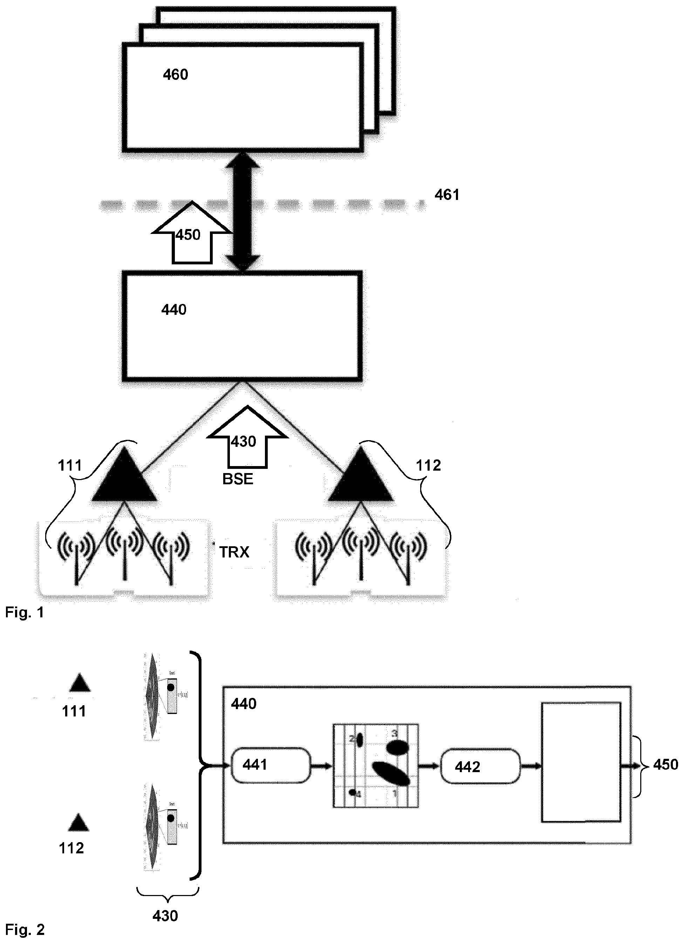

Figure 1 schematically and exemplarily illustrates the method according to the present invention as well as functional elements involved, namely, besides first and second sensing-capable or sensing-enabled entities or functionalities, a sensing edge server, processing first stage sensing inference data received from one or more of the sensing-capable or sensing-enabled entities or functionalities, and a sensing application server providing sensing-related services and/or generating sensing application data based on second stage sensing inference data received from the sensing edge server or from a plurality of sensing edge servers.
Figure 2 schematically and exemplarily illustrates inference steps performed in the sensing edge server.
Figure 3, schematically and exemplarily illustrates an example of the information exchange and the interface between a sensing edge server towards the sensing application server.
Figures 4 to 6 schematically and exemplarily illustrate different sensing scenarios involving one or more base stations or base station entities as sensing-capable or sensing-enabled entities or functionalities.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

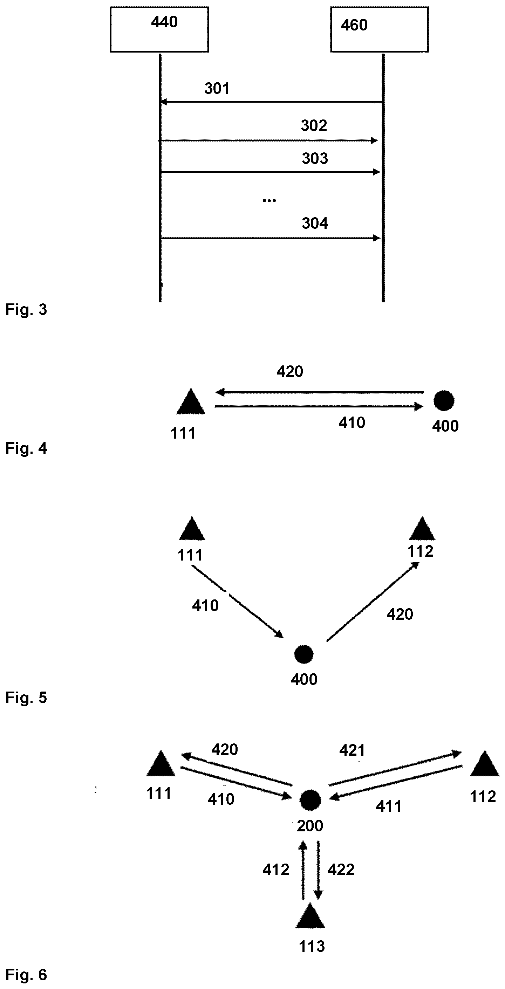

Figures 4 to 6 schematically and exemplarily illustrate different sensing scenarios involving one or more base stations or base station entities as sensing-capable or sensing-enabled entities or functionalities. In Figure 4, a base station entity as a (first) sensing-capable or sensing-enabled entity or functionality 111 is schematically and exemplarily represented, which (first) sensing-capable or sensing-enabled entity or functionality 111 transmits signals (a radiofrequency sensing signals 410) and receives the reflected signals (a radiofrequency sensing reception signals 420), the echoes, of a target 400 in a mono-static sensing operation scenario.

In Figure 5, a bi-static operation scenario is schematically and exemplarily shown, where a target 400 is illuminated - i.e. radiofrequency sensing signals 410 sent - by a first base station entity as a first sensing-capable or sensing-enabled entity or functionality 111 and radiofrequency sensing reception signals 420 (resulting from the radiofrequency sensing signals 410) detected by a second base station entity as a second sensing-capable or sensing-enabled entity or functionality 112.

In Figure 6, a situation is schematically and exemplarily represented, where a target 400 is illuminated (i.e. radiofrequency sensing signals sent) and (radiofrequency sensing reception signals) detected, respectively, by a first, second and third base station entity as first, second and third sensing-capable or sensing-enabled entities or functionalities 111, 112, 113 (i.e. Figure 6 depicts mono-static sensing of three base stations 111, 112, 113). The first sensing-capable or sensing-enabled entity or functionality 111 sends, or transmits, a first radiofrequency sensing signal 410 and receives - as a result thereof - a first radiofrequency sensing reception signal 420. The second sensing-capable or sensing-enabled entity or functionality 112 sends, or transmits, a second radiofrequency sensing signal 411 and receives - as a result thereof - a second radiofrequency sensing reception signal 421. The third sensing-capable or sensing-enabled entity or functionality 113 sends, or transmits, a third radiofrequency sensing signal 412 and receives - as a result thereof - a third radiofrequency sensing reception signal 422. Furthermore, it is conceivable that, especially depending on the respective timing of the first, second and third radiofrequency sensing signals 410, 411, 412, e.g., the first radiofrequency sensing reception signal 420 is a result, especially besides the first radiofrequency sensing signal 410, of at least one of the second and third radiofrequency sensing signals 411, 412, and analogously for the other radiofrequency sensing reception signals 421, 422.

Typically, in mono-static operation - cf. Figure 4 -, the transmitter (of radiofrequency sensing signals 410, 411, 412) and the receiver (of radiofrequency sensing reception signals 420, 421, 422) are co-located in the sensing-capable or sensing-enabled entities or functionalities 111, 112, 113 (i.e., typically base station entities and/or user equipments), respectively, especially with full-duplex capability. The measurements of ToA (Time-of-Arrival), AoA (Angle-of-Arrival), AoD (Angle-of-Departure), and Doppler of each of the resolved (radiofrequency signal propagation) paths correspond to the detection of a target 400, where the location is relative to the coordinate system of the sensing-capable or sensing-enabled entities or functionalities 111, 112, 113 (i.e., typically base station entities and/or user equipments), respectively.

In contrast to mono-static operation, in bi/multi-static operation - cf. Figure 5 and also Figure 6 -, the transmitter (of radiofrequency sensing signals 410, 411, 412) and the receiver (of radiofrequency sensing reception signals 420, 421, 422) are located at different sites, i.e. a (radiofrequency sensing) signal between two sensing-capable or sensing-enabled entities or functionalities such as a base station entity and a user equipment, such signal to the user equipment is able to be used to estimate ToA, AoA, AoD, and Doppler of each of the resolved (radiofrequency signal propagation) paths. In case the two sensing-capable or sensing-enabled entities or functionalities rather correspond to two base station entities, the targets are detected, and their location estimated especially in an absolute joint coordinate system of these base station entities.

In Figure 1, the method according to the present invention is schematically and exemplarily shown. Furthermore, functional elements involved, namely, besides first and second sensing-capable or sensing-enabled entities or functionalities 111, 112, a sensing edge server 440, processing first stage sensing inference data 430 received from one or more of the sensing-capable or sensing-enabled entities or functionalities 111, 112, 113, and a sensing application server 460 providing sensing-related services and/or generating sensing application data based on second stage sensing inference data 450 received from the sensing edge server 440 or from a plurality of sensing edge servers (a plurality of sensing edge servers is, however, not shown in the exemplary representation of Figure 1).

Hence, the functional elements involved according to the present invention comprise:
-- the sensing-capable or sensing-enabled entities or functionalities (or, sensing base stations) 111, 112, 113 with one or more mono-static sensing capable transmission and/or reception capabilities, TX/RX, especially antenna entities or functionalities and corresponding transmission and reception circuitry, wherein - especially in case of integrated communication and sensing, ICaS, sensing and communication is performed by the same base station HW (i.e. sensing-capable or sensing-enabled entities or functionalities 111, 112, 113;
-- sensing edge server 440 processing data from one or more sensing base stations 111, 112, 113;
-- sensing application server 460 realizing use case(s) based upon sensing detection data (second stage sensing inference data 450) received from the sensing edge server 440 with optional fusion of data from external sources (e.g. provided from dedicated stand-alone sensors - this is, however, not shown in Figure 1).

According to the present invention, in each function (i.e. at each stage) dedicated sensing data inference is carried out. A defined inference result is provided at the interfaces to the subsequent function.

Hence, Figure 1 shows the functional elements involved and the cascading of sensing data inference, i.e. the sensing-capable or sensing-enabled entities or functionalities 111, 112 generate - from or based on the processing of radiofrequency sensing signals 420, 421, 422 and especially by means of, typically, a plurality transceivers (TRX) or transceiver station illuminating sensing targets and providing raw sensing data towards base stations or base station entities (BSE), the base stations aggregating sensing data from the one or multiple transceivers TRX - first stage sensing inference data 430, and provide these first stage sensing inference data 430 to the sensing edge server 440 (or to the plurality of sensing edge servers). Based on the first stage sensing inference data 430, the sensing edge server 440 generates second stage sensing inference data 450 (i.e. the sensing edge server 440 infers object data from radio sensing information) and provides or transmits those to the sensing application server 460 in order for the sensing application server 460 to be able to provide sensing-related services and/or generate sensing application data (i.e. the sensing application server 460 provides application for the dedicated use case). It may be the case that the sensing application server 460 (or, rather, the plurality of sensing application servers 460) is not part of the mobile broadband network, or mobile communication network 100; in this case, the sensing application server 460 (or the plurality thereof) is typically able to access the sensing-as-a-service functionality via a network application programming interface (API) 461.

It is thereby advantageously possible, according to the present invention, to make use of the hierarchical and service-oriented architecture of the cellular mobile broadband network 100. Thereby, for each inference step best-of-breed methods can be applied. According to the present invention, it is especially preferred to use open interfaces
-- between the sensing-capable or sensing-enabled entities or functionalities 111, 112, 113 and the sensing edge server(s) 440, and/or
-- between the sensing edge server(s) 440 and the sensing application server (460).

According to the present invention, such cascading of sensing data inference especially provides the following benefits:
-- raw data inference can be carried out at the receivers in real time;
-- deep insights into radio specific functionalities are hidden;
-- the amount of data to be provided to the next inference step is limited;
-- cellular data fusion is supported when combining processed sensing data from relevant neighboring receivers;
-- open architecture allows reuse and optimization of cascading process;
-- application servers for specific use cases can build on generalized extracted insights provided by application programming interfaces, APIs.

Figure 2 schematically and exemplarily illustrates inference steps performed in (or at) the sensing edge server 440: The sensing edge server 440 receives the first stage sensing inference data 430 (e.g. radar-like images / image streams) from one or multiple sensing base stations 111, 112 - especially periodically, (quasi-)continuously, or at specific points in time or on a subscription basis -, wherein Figure 2 exemplarily depicts the first and second sensing-related or sensing-enabled entities or functionalities 111, 112 providing first stage sensing inference data 430 to the sensing edge server 440. Especially by means of data fusion of these images and image streams, respectively, (i.e. of the first stage sensing inference data 430) into an absolute coordinate system and subsequent model- or Al/ML-based inference, the sensing edge server 440 is able to derive results on:
-- object detection;
-- object identification (e.g., shape, material, body);
-- object localization (in absolute coordinate system), wherein this typically requires to know in advance the absolute position of base station antennas (i.e. of the sensing-capable or sensing-enabled entities or functionalities 111, 112) and their orientations;
-- object tracking;
-- environment information (buildings, plants, etc.).

Preferably according to the present invention, this is realized by means of the sensing edge server 440 conducting or performing a first inference step 441, and by means of conducting or performing a second inference step 442; both inference steps are schematically shown in Figure 2.

The first inference step 441 especially involves the preprocessed information obtained from the sensing base stations 111, 112 (i.e. the first stage sensing inference data 430) being transformed from local information into a general coordinate system, thereby especially applying geographic coordinates (e.g. according to the world geodetic system 1984, WGS84) or specific cartesian coordinates valid for the specific area of investigation (for instance when applied for distinct indoor or outdoor campus areas). Thereby, the sensing edge server 440 may fuse input data from various sensing base stations 111, 112 covering the same area.

The second inference step 442 especially involves the sensing edge server 440 identifying the various objects and providing object information, especially defined data on object-level (such as, e.g., "Object 1: {...}, Object 2: {...}, Object 3: {...}, Object 4: {...}"). These results are provided in a defined format (and corresponding to the second stage sensing inference data 450) by the sensing edge server 440 to the sensing application server 460, e.g. using a representation in a JSON formatted template for a single object.

It is especially possible and preferred, according to the present invention, that different operation modes (or transport modes) are applied or used with respective to transport procedures between the sensing-capable or sensing-enabled entities or functionalities 111, 112 and the sensing edge server 440, such as, e.g.:
-- a continuous mode: sensing base stations (i.e. sensing-capable or sensing-enabled entities or functionalities 111, 112) can continuously provide streams of sensing images, and the sensing edge server 440 is able to continuously update object information;
-- periodic mode: the sensing edge server periodically updates the sensing information; this periodicity is negotiated between sensing edge server and sensing application server.
-- one-shot request: the sensing application server requests one-time sensing information from sensing edge server.

Upon the data - i.e. the second stage sensing inference data 450 - being provided by the sensing edge server 440, the sensing application server 460 can realize the individual use case application.

The sensing edge server 440 typically serves sensing data (i.e. the second stage sensing inference data 450) in a generalized granularity, so that subsequent sensing application server 460 can support specific use cases.

Figure 3 schematically and exemplarily illustrates an example of the information exchange and the interface between a sensing edge server 440 towards the sensing application server 460.

Figure 3 shows, in a first processing step 301, the at least one sensing edge server 440 receiving, from the at least one sensing application server 460, a request message regarding the at least one sensing-related service, especially including, or comprising, a sensing area selection and/or a sensing quality indication and/or a selection of the sensing-capable or sensing-enabled entities or functionalities and/or an object notification regarding the sensing object and/or an indication regarding the type (or mode) of notification : continuous mode, periodic mode, one-shot notification.

In second, third, and fourth processing steps 302, 303, 304, the at least one sensing edge server 440 transmits, to the at least one sensing application server 460, a response message (or, rather, a plurality of response messages) regarding the at least one sensing-related service, wherein the response message or response messages comprises, as its response content, an acknowledgement (e.g. in the second processing step 302) or a rejection (e.g. in the third processing step 303) or a modification (e.g. in the fourth processing step 304) of the requested sensing-related service.

Additionally, the sensing edge server 440 might transmit, respectively, sensing information or sensing information messages to the sensing application server 460 regarding the results of the sensing operations performed.

Detected objects are identified by an identifier information - their object ID (objectld) generated by the sensing edge server 440 upon recognition of a new object and maintained as long as the respective object can be tracked:

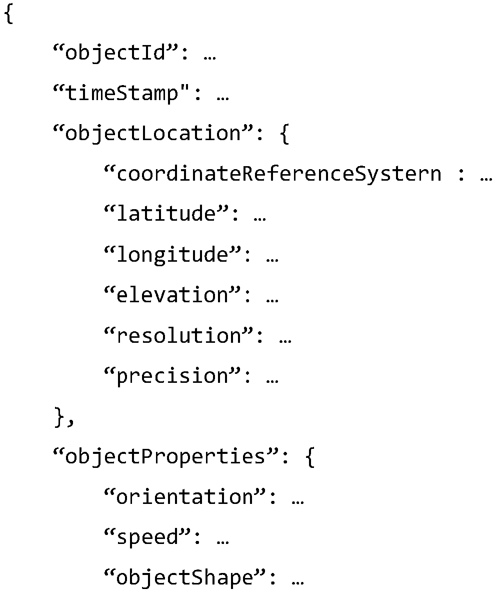

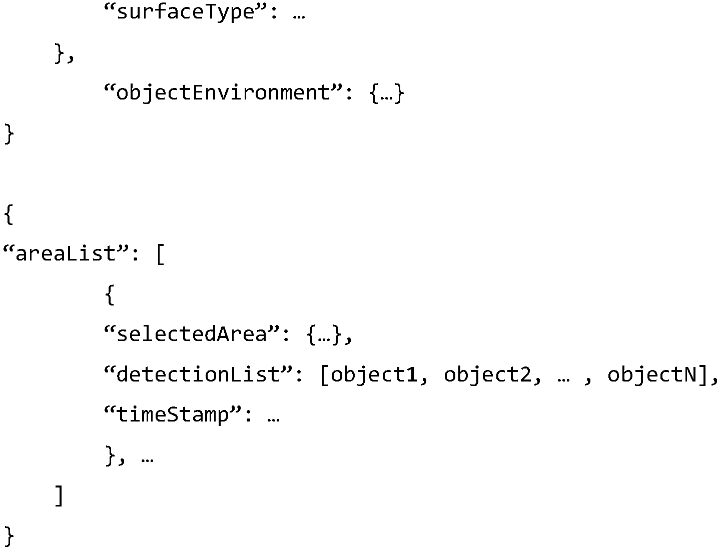

Hence, the interface of sensing edge server 440 towards sensing application server 460 can be realized in various ways. The different approaches may vary depending on the operation mode addressed, such as:
-- REST API: This is specifically beneficial for applications that use one-shot requests only.
-- Pub/Sub API: Publication-Subscribe methods may make use of WebSockets, MQTT or similar. This may be best suited for periodic mode operation.
-- Stream-based API: This may be best for continuous mode.

Other application interface methods may be applied that may evolve during definition of 6G systems.

Typically, it is up to the sensing edge server 440 which sensing operation mode (or transmission mode) and procedures it triggers towards the involved sensing base stations 111, 112, 113 upon requests from sensing application server(s) 460. For instance, more than one sensing application servers 460 may be subscribed to sensing information from one specific sensing area. Then it is up to the sensing edge server 440 to request continuous mode or periodic mode from the involved sensing base stations 111, 112, 113. In this sense, the sensing edge server determines also the set of sensing base stations required for sensing inference.

The following sensing procedures are especially used between sensing edge server 440 and the sensing application server 460 according to the present invention.

In order to communicate and process the demand of the individual (sensing) applications in detail the following aspects have to be considered:
(a) sensing area selection
(b) sensing quality
(c) object detection notification
(d) tracking of identified objects
(e) re-negotiation and update of sensing parameters.

(a) sensing area selection:
   The application (i.e. the sensing application server 460) needs to define the area or region served by the ICaS-enabled cellular network.

Examples of area definitions (in JSON-format) include, e.g.: 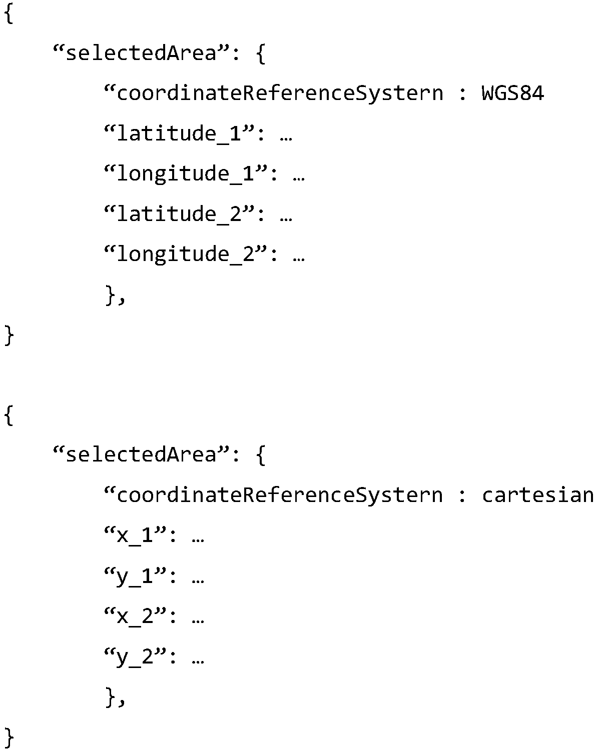 i.e. area rectangles (regarding the selected area) are defined either using geographic of cartesian coordinates, respectively. The first may be used in outdoor environments while the latter in indoor environments applying relative coordinates to an a-priori known location or region.

Alternatively, other coordinate systems and area shapes (e.g. circular, ellipsoid) may be applied. Applications may request object sensing data from one or multiple areas.

### (b) sensing quality:

Object sensing in ICaS mobile broadband networks may provide different levels of object sensing performance, depending on:
-- sensing technology available in the selected area (e.g. defined by the MIMO capability of the serving cellular antennas or given by the frequency range and bandwidth available)
-- amount of radio resources provided for the sensing task. This determines for instance the angular resolution as well as the update rate of measurements.

By this dynamic negotiation of the sensing quality, applications (i.e. the sensing application server 460) may trigger sensing events for various tasks; for instance, start with low resolution sensing for a rather larger area, and increase sensing resolution for a smaller area or even on single object basis as needed.

### (c) object detection notification

In this mode of operation, the sensing edge server 440 does not continuously provide sensing information to an requesting sensing application server 460 (as it is done in continuous mode or periodic mode); instead, sensing application server 460 are notified only when an object was detected according the specifications given in sensing area selection and sensing quality. Such object detection notification allows to realize various use cases addressing aspects of intrusion detection or the like.

### (d) tracking of identified objects

Object sensing results are especially described in a format like exemplarily shown above in relation to the object ID (objectld) - i.e. by means of an identifier information - generated by the sensing edge server 440 upon recognition of a new object and maintained as long as the respective object can be tracked.

An individual identified object is specified by its objectld. This objectld can be used by the sensing application server 460 to request further sensing information regarding this specific object. For instance, the sensing application server 460 may request "more detailed" object sensing information by requesting a higher sensing quality in a one-shot request. Alternatively, object tracking can be requested by requesting continuous sensing for the this particular objectld in continuous mode or periodic mode.

### (e) re-negotiation and update of sensing parameters

Finally, sensing requests from the sensing application server 460 towards sensing edge server 440 may be re-negotiated and updated at any time. It is up to the sensing edge server 440 to grant or reject application server requests (i.e. a request messages regarding the at least one sensing-related service, according to the first step of the inventive method), considering authorization, resource demand and network capabilities - cf. the response message or response messages as shown in Figure 3, e.g. acknowledgement (second processing step 302), rejection (third processing step 303) or modification (fourth processing step 304) of the requested sensing-related service. Likewise, the sensing application server 460 and/or the sensing edge server 440 may terminate ongoing object sensing tasks.

These functional procedures described above will apply signaling procedures between authorized sensing application server 460 and sensing edge server 440, especially via the network application programming interface 461 shown in Figure 1. The majority of signaling procedures will be initiated by the sensing application server 460 whereby the sensing edge server 440 grants, rejects or modifies the request as exemplarily shown in Figure 3. Thereby, multiple of the described sensing aspects may be combined in a single signaling procedure (e.g. requesting a specific sensing area selection and requesting a specific sensing quality).

However, in case of network initiated sensing termination or sensing modification the sensing edge server 440 initiated the signaling procedure.

The following sensing application-driven tasks are especially performed by the sensing edge server 440:
Upon request of a sensing application server 460 (see above) or driven by changes in the radio and base station environment, the sensing edge server 440 has to conduct the following tasks. Thereby, the capabilities and demands of one or multiple sensing application servers 460 and one or multiple bases stations (i.e. sensing-capable or sensing-enabled entities or functionalities 111, 112) have to be considered:
-- maintaining an active directory of the (negotiated) sensing information and the demands of all active sensing application servers 460, including individual
   -- selected sensing areas
   -- selected sensing quality
   -- type of notification: continuous mode, periodic mode, one-shot notification
   -- tracking of objects
-- maintaining an active directory of base station capabilities and their sensing environment, such as
   -- covered sensing areas in general coordinate system, for instance given by absolute antenna information on location/azimuth(orientation)/elevation/tilt
   -- current sensing capabilities, for instance given by
      -- applied frequency range
      -- MIMO capabilities determining angular coverage and resolution
      -- ranging resolution
      -- relative velocity capabilities from doppler measurements
-- consideration of sensing resource demand versus communication resource demand:

Thereby, this function may be provided by the sensing edge server 440 or by another element to which the sensing edge server 440 maintains a communication link.

Upon these continuous directory capabilities, the sensing edge server 440 performs the following tasks when serving requests from sensing application server(s) 460:
(a) verifying and negotiating sensing areas and sensing capabilities,
(b) adapting sensing information from related base stations according to agreed demands of sensing application server(s) 460,
(c) modifying sensing information on sensing application server 460 request or resulting from changes of base station sensing capabilities.

(a) verifying and negotiating sensing areas and sensing capabilities:
   On an object sensing request from the sensing application server 460 the sensing edge server 440 verifies if the request can be served.

Therefore, it has to check if the addressed sensing area is covered by ICaS-capable base stations (i.e. sensing-capable or sensing-enabled entities or functionalities 111, 112) and if the sensing quality and update rate of sensing information can be guaranteed.

Since the sensing edge server 440 serves one or multiple sensing application server 460 with potentially overlapping demands, it is one of the tasks of the sensing edge server 440 to combine these demands towards the ICaS-capable base stations (i.e. sensing-capable or sensing-enabled entities or functionalities 111, 112) involved. In this sense, ICaS-capable base stations provide the sensing information to the sensing application server 460 which collectively can serve multiple application sever requests (cf. Figure 2). It is the task of the sensing edge server 440 to extract the requested sensing information from base station sensing data as described above for each sensing application server 460.

When the sensing request of a sensing application server 460 cannot be fulfilled, the sensing edge server 440 either rejects the request or proposes modified object sensing (e.g. in respect of sensing quality or update rate). Thereby, the overall sensing resource demand has to be considered by the sensing edge server 440, internally or in exchange with a dedicated resource function.
(b) adapting sensing information from related base stations according to agreed demands of sensing application server(s) 460:
According to the negotiated sensing service requirements, the sensing edge server 440 selects the appropriate base stations (i.e. sensing-capable or sensing-enabled entities or functionalities 111, 112) covering the requested sensing area. Continuous/Periodic/One-Shot sensing information is requested according to the demanded sensing quality.

As stated above, the sensing edge server 440 may combine overlapping demands from various sensing application server 460; different algorithms may be applied, e.g.:
-- MaximumPeformance: Considering the most stringent sensing demand from sensing application server 460;
-- ResourceOptimized: Find the best sensing quality with regard to sensing resource and communication resource demands;
-- LowImpact: In this case sensing is only performed on the spare communication resources of the mobile communication network 100.

Depending on the strategy chosen the Sensing Edge Server may need to "re-negotiate" or modify the sensing demand towards the respective Applications Servers.
(c) modifying sensing information on sensing application server 460 request or resulting from changes of base station sensing capabilities:
Following the concept described above, the task of the sensing edge server 440 is to negotiate the sensing requests from the sensing application server 460 (or sensing application servers) against the sensing capabilities of the mobile communication network 100. These sensing capabilities are not static, but may change over time.

One aspect is sharing of resources with communication services in an ICaS system. According to resource management decisions in the sensing edge server 440 (or in a dedicated function), the resources dedicated for sensing may be reduced. For instance, the sensing periodicity may be reduced for dedicated sensing functions, when more communication resources are required. The sensing edge server 440 has to manage this by negotiating the resource demand and by informing the affected sensing application server(s) 460 about these modifications; especially, maintenance of a minimum sensing service level is preferably to be ensured; otherwise sensing services may have to be rejected.

## Claims

1. Method for providing at least one sensing-related service by means of processing sensing-related data that is generated within or as part of a mobile communication network (100),
wherein the mobile communication network (100) comprises at least a first sensing-capable or sensing-enabled entity or functionality (111, 20) and a second sensing-capable or sensing-enabled entity or functionality (112, 21), and wherein the mobile communication network (100) comprises or is associated or assigned to at least one sensing edge server (440) and at least one sensing application server (460),
wherein the at least one sensing-capable or sensing-enabled entity or functionality (111, 20) transmits a radiofrequency sensing signal (410), wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and/or second sensing-capable or sensing-enabled entities or functionalities (111, 112) is able to be gathered as first stage sensing inference data (430), wherein the first stage sensing inference data (430) are provided to the at least one sensing edge server (440) for generating second stage sensing inference data (450), and wherein the second stage sensing inference data (450) are provided to the at least one sensing application server (460) for providing sensing-related services and/or generating sensing application data,
wherein, in order to provide at least one sensing-related service, the method comprises the following steps:
- - in a first step, the at least one sensing edge server (440) receives, from the at least one sensing application server (460), a request message regarding the at least one sensing-related service,
- - in a second step, the at least one sensing edge server (440) transmits, to the at least one sensing application server (460), a response message regarding the at least one sensing-related service, wherein the response message comprises, as its response content, an acknowledgement or a rejection or a modification of the requested sensing-related service,
**characterised in that**
the request message regarding the at least one sensing-related service and/or the response message regarding the at least one sensing-related service relates to or realizes application-driven tasks that are performed by the sensing edge server (440), wherein the sensing edge server (440) considers sensing resources demand versus communication resources demand, and controls resources of the mobile communication network (100) used for sensing in view of available network resources and in view of communication resources demand.

2. Method according to claim 1, wherein - after the response message regarding the at least one sensing-related service has been transmitted, in the second step and by the at least one sensing edge server (440) - the at least one sensing edge server (440) transmits, to the at least one sensing application server (460), at least one further response message regarding the at least one sensing-related service, wherein the further response message comprises a different response content compared to the response message.

3. Method according to one of the preceding claims, wherein the request message regarding the at least one sensing-related service, received by the sensing edge server (440) from the at least one sensing application server (460), comprises at least one out of the following:
- - a sensing area selection,
- - a sensing quality indication,
- - a selection of the sensing-capable or sensing-enabled entities or functionalities (111, 112, 20, 21),
- - an object determination notification,
- - a tracking indication regarding identified objects,
- - an update and/or a re-negotiation regarding sensing parameters.

4. Method according to one of the preceding claims, wherein the request message regarding the at least one sensing-related service and/or the response message and/or the further response message regarding the at least one sensing-related service relates to or realizes application-driven tasks that are performed by the sensing edge server (440), especially requested by the sensing application server (460) and/or driven by changes, capabilities or demands in the radio environment and/or in the environment of the sensing-capable or sensing-enabled entities or functionalities (111, 112, 20, 21), wherein especially the application-driven tasks that are performed by the sensing edge server (440) comprise at least one out of the following:
- - the sensing edge server (440) maintains an active directory of sensing information with regard to request messages received by the at least one sensing application server (460), especially relating to at least one out of the following: the selected sensing area selection, the selected sensing quality indication, a selected type of notification, and the selected tracking indication regarding identified objects,
- - the sensing edge server (440) maintains an active directory of capabilities of the sensing-capable or sensing-enabled entities or functionalities (111, 112, 20, 21) and their sensing environment, especially the covered sensing areas and/or the current sensing capabilities,
- - the sensing edge server (440) adapts sensing information from related sensing-capable or sensing-enabled entities or functionalities (111, 112, 20, 21) according to agreed demands of sensing application server (460),
- - the sensing edge server (440) performs sensing area selection and/or a selection of the sensing-capable or sensing-enabled entities or functionalities (111, 112, 20, 21) and/or a sensing quality selection and/or re-negotiation and update of sensing parameters.

5. Method according to one of the preceding claims, wherein the first stage sensing inference data (430) comprise at least one out of the following:
- - radar-like images, especially in a relative coordinate system,
- - elements with significant sensing information,
- - further information available during local analysis at the first and second sensing-capable or sensing-enabled entities or functionalities (111, 20, 112, 21), especially velocity indications, especially inferred from doppler measurements, range resolution, angular resolution, channel observations,
- - time-sequencing of static images, especially time-stamped image streams, especially of radar-like images,
- - a vector of features regarding at least a part of the radar-like images, the vector of features especially comprising data regarding
-- the intensity of the received signal,
-- the relative velocity derived from doppler measurements and/or
-- a self-assessment information regarding one or a plurality of the inferred properties based on the respective sensing-capable or sensing-enabled entity or functionality (111, 20, 112, 21),
wherein especially the sensing edge server (440) performs both a first inference step (441) and a second inference step (442), wherein the second stage sensing inference data (450) correspond to the result of the second inference step (442),
wherein especially, the first inference step (441) involves transforming the sensing inference data (430) into a general coordinate system or in an absolute coordinate system, especially transformed from local information into the general coordinate system or into the absolute coordinate system, wherein especially, the second inference step (442) involves the sensing edge server (440) identifying objects and providing object information, especially defined data on object level, especially in a defined format, preferably using JavaScript Object Notation, JSON.

6. Method according to one of the preceding claims, wherein the second stage sensing inference data (450) are transmitted, by the sensing edge server (440), and received, by the sensing application server (460),
involving an application programming interface, especially according to at least one out of the following:
- - a representational state transfer, REST, application programming interface, especially in case that the sensing edge server (440) requests one-time sensing information from the sensing-capable or sensing-enabled entities or functionalities (111, 20, 112, 21),
- - a publication-subscription application programming interface, especially using WebSocket, MQ telemetry transport, MQTT, especially in case that the sensing edge server (440) and the sensing-capable or sensing-enabled entities or functionalities (111, 20, 112, 21) communicate according to the periodic mode operation,
- - a stream-based application programming interface, especially in case that the sensing edge server (440) and the sensing-capable or sensing-enabled entities or functionalities (111, 20, 112, 21) communicate according to the continuous mode operation.

7. System comprising a mobile communication network (100) for providing at least one sensing-related service by means of processing sensing-related data that is generated within or as part of a mobile communication network (100), wherein the mobile communication network (100) comprises at least a first sensing-capable or sensing-enabled entity or functionality (111, 20) and a second sensing-capable or sensing-enabled entity or functionality (112, 21), and wherein the mobile communication network (100) comprises or is associated or assigned to at least one sensing edge server (440) and at least one sensing application server (460),
wherein the at least one sensing-capable or sensing-enabled entity or functionality (111, 20) transmits a radiofrequency sensing signal (410), wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and/or second sensing-capable or sensing-enabled entities or functionalities (111, 112) is able to be gathered as first stage sensing inference data (430),
wherein the first stage sensing inference data (430) are provided to the at least one sensing edge server (440) for generating second stage sensing inference data (450), and wherein the second stage sensing inference data (450) are provided to the at least one sensing application server (460) for providing sensing-related services and/or generating sensing application data, wherein, in order to provide at least one sensing-related service, the system comprising a mobile communication network (100) is configured such that:
- - the at least one sensing edge server (440) receives, from the at least one sensing application server (460), a request message regarding the at least one sensing-related service,
- - the at least one sensing edge server (440) transmits, to the at least one sensing application server (460), a response message regarding the at least one sensing-related service, wherein the response message comprises, as its response content, an acknowledgement or a rejection or a modification of the requested sensing-related service,
**characterised in that**
the request message regarding the at least one sensing-related service and/or the response message regarding the at least one sensing-related service relates to or realizes application-driven tasks that are performed by the sensing edge server (440), wherein the sensing edge server (440) considers sensing resources demand versus communication resources demand, and controls resources of the mobile communication network (100) used for sensing in view of available network resources and in view of communication resources demand.

8. Sensing edge server (440) as part of a system comprising a mobile communication network (100) according to claim 7, for providing at least one sensing-related service by means of processing sensing-related data that is generated within or as part of a mobile communication network (100),
wherein the sensing edge server (440) communicates with at least one sensing-capable or sensing-enabled entity or functionality (111, 20, 112, 21), wherein, in order to provide at least one sensing-related service, the sensing edge server (440) is configured such that:
-- the at least one sensing edge server (440) receives, from the at least one sensing application server (460), a request message regarding the at least one sensing-related service,
-- the at least one sensing edge server (440) transmits, to the at least one sensing application server (460), a response message regarding the at least one sensing-related service, wherein the response message comprises, as its response content, an acknowledgement or a rejection or a modification of the requested sensing-related service,
**characterised in that**
the request message regarding the at least one sensing-related service and/or the response message regarding the at least one sensing-related service relates to or realizes application-driven tasks that are performed by the sensing edge server (440), wherein the sensing edge server (440) considers sensing resources demand versus communication resources demand, and controls resources of the mobile communication network (100) used for sensing in view of available network resources and in view of communication resources demand.

9. Program comprising a computer readable program code, which, when executed on a computer and/or on a sensing-capable or sensing-enabled entity or functionality (111, 20, 112, 21) and/or on a sensing edge server (440) and/or on a sensing application server (460), or in part on a sensing-capable or sensing-enabled entity or functionality (111, 20, 112, 21) and/or in part on a sensing edge server (440) and/or in part on a sensing application server (460), causes the computer and/or the sensing-capable or sensing-enabled entity or functionality (111, 20, 112, 21) and/or the sensing edge server (440) and/or the sensing application server (460) to perform a method according one of claims 1 to 6.

10. Computer-readable medium comprising instructions which when executed on a computer and/or on a sensing-capable or sensing-enabled entity or functionality (111, 20, 112, 21) and/or on a sensing edge server (440) and/or on a sensing application server (460), or in part on a sensing-capable or sensing-enabled entity or functionality (111, 20, 112, 21) and/or in part on a sensing edge server (440) and/or in part on a sensing application server (460), causes the computer and/or the sensing-capable or sensing-enabled entity or functionality (111, 20, 112, 21) and/or the sensing edge server (440) and/or the sensing application server (460) to perform a method according to one of claims 1 to 6.

## Patentansprüche

1. Verfahren zum Bereitstellen mindestens eines erfassungsbezogenen Dienstes mittels Verarbeiten erfassungsbezogener Daten, die innerhalb oder als Teil eines Mobilkommunikationsnetzes (100) generiert werden, wobei das Mobilkommunikationsnetz (100) mindestens eine erste erfassungsfähige oder erfassungsbefähigte Entität oder Funktionalität (111, 20) und eine zweite erfassungsfähige oder erfassungsbefähigte Entität oder Funktionalität (112, 21) umfasst, und wobei das Mobilkommunikationsnetz (100) mindestens einen Erfassungs-Edge-Server (440) und mindestens einen Erfassungsanwendungsserver (460) umfasst oder diesen zugeordnet oder zugewiesen ist,
wobei die mindestens eine erfassungsfähige oder erfassungsbefähigte Entität oder Funktionalität (111, 20) ein Hochfrequenz-Erfassungssignal (410) sendet, wobei, als ein Ergebnis des Sendens des Hochfrequenz-Erfassungssignals (410), ein Hochfrequenz-Erfassungsempfangssignal (420) entweder durch die erste erfassungsfähige oder erfassungsbefähigte Entität oder Funktionalität (111) oder die zweite erfassungsfähige oder erfassungsbefähigte Entität oder Funktionalität (112) oder beide empfangen wird, wobei mittels des Hochfrequenz-Erfassungsempfangssignals (420) Informationen über die Umgebung der ersten und/oder zweiten erfassungsfähigen oder erfassungsbefähigten Entitäten oder Funktionalitäten (111, 112) als Erfassungsinferenzdaten (430) der ersten Stufe gesammelt werden können,
wobei die Erfassungsinferenzdaten (430) der ersten Stufe dem mindestens einen Erfassungs-Edge-Server (440) zum Generieren von Erfassungsinferenzdaten (450) der zweiten Stufe bereitgestellt werden, und wobei die Erfassungsinferenzdaten (450) der zweiten Stufe dem mindestens einen Erfassungsanwendungsserver (460) zum Bereitstellen von erfassungsbezogenen Diensten und/oder Generieren von Erfassungsanwendungsdaten bereitgestellt werden,
wobei, um mindestens einen erfassungsbezogenen Dienst bereitzustellen, das Verfahren die folgenden Schritte umfasst:
- in einem ersten Schritt empfängt der mindestens eine Erfassungs-Edge-Server (440) von dem mindestens einen Erfassungsanwendungsserver (460) eine Anforderungsnachricht bezüglich des mindestens einen erfassungsbezogenen Dienstes,
- in einem zweiten Schritt sendet der mindestens eine Erfassungs-Edge-Server (440) an den mindestens einen Erfassungsanwendungsserver (460) eine Antwortnachricht bezüglich des mindestens einen erfassungsbezogenen Dienstes, wobei die Antwortnachricht als ihren Antwortinhalt eine Bestätigung oder eine Ablehnung oder eine Modifizierung des angeforderten erfassungsbezogenen Dienstes umfasst,
**dadurch gekennzeichnet, dass** die Anforderungsnachricht bezüglich des mindestens einen erfassungsbezogenen Dienstes und/oder die Antwortnachricht bezüglich des mindestens einen erfassungsbezogenen Dienstes sich auf anwendungsgetriebene Aufgaben, die durch den Erfassungs-Edge-Server (440) durchgeführt werden, bezieht oder diese realisiert, wobei der Erfassungs-Edge-Server (440) den Erfassungsressourcenbedarf im Verhältnis zum Kommunikationsressourcenbedarf berücksichtigt und Ressourcen des Mobilkommunikationsnetzes (100), die zum Erfassen verwendet werden, im Hinblick auf verfügbare Netzressourcen und im Hinblick auf einen Kommunikationsressourcenbedarf steuert.

2. Verfahren nach Anspruch 1, wobei der mindestens eine Erfassungs-Edge-Server (440), nachdem die Antwortnachricht bezüglich des mindestens einen erfassungsbezogenen Dienstes in dem zweiten Schritt und durch den mindestens einen Erfassungs-Edge-Server (440) gesendet wurde, mindestens eine weitere Antwortnachricht bezüglich des mindestens einen erfassungsbezogenen Dienstes an den mindestens einen Erfassungsanwendungsserver (460) sendet, wobei die weitere Antwortnachricht einen anderen Antwortinhalt als die Antwortnachricht umfasst.

3. Verfahren nach einem der vorangehenden Ansprüche, wobei die Anforderungsnachricht bezüglich des mindestens einen erfassungsbezogenen Dienstes, die durch den Erfassungs-Edge-Server (440) von dem mindestens einen Erfassungsanwendungsserver (460) empfangen wird, mindestens eines von Folgendem umfasst:
- eine Erfassungsgebietsauswahl,
- eine Erfassungsqualitätsangabe,
- eine Auswahl der erfassungsfähigen oder erfassungsbefähigten Entitäten oder Funktionalitäten (111, 112, 20, 21),
- eine Objektbestimmungsnachricht,
- eine Verfolgungsangabe bezüglich identifizierter Objekte,
- eine Aktualisierung und/oder Neu-Negoziierung bezüglich Erfassungsparametern.

4. Verfahren nach einem der vorangehenden Ansprüche, wobei die Anforderungsnachricht bezüglich des mindestens einen erfassungsbezogenen Dienstes und/oder die Antwortnachricht und/oder die weitere Antwortnachricht bezüglich des mindestens einen erfassungsbezogenen Dienstes sich auf anwendungsgetriebene Aufgaben, die durch den Erfassungs-Edge-Server (440) durchgeführt werden, bezieht oder diese realisiert, insbesondere durch den Erfassungsanwendungsserver (460) angefordert werden und/oder durch Änderungen, Fähigkeiten oder Forderungen in der Funkumgebung und/oder in der Umgebung der erfassungsfähigen oder erfassungsbefähigten Entitäten oder Funktionalitäten (111, 112, 20, 21) angestoßen werden, wobei insbesondere die anwendungsgetriebenen Aufgaben, die durch den Erfassungs-Edge-Server (440) durchgeführt werden, mindestens eines von Folgendem umfassen:
- der Erfassungs-Edge-Server (440) führt ein aktives Verzeichnis von Erfassungsinformationen in Bezug auf Anforderungsnachrichten, die durch den mindestens einen Erfassungsanwendungsserver (460) empfangen werden, insbesondere bezüglich mindestens eines von Folgendem: der ausgewählten Erfassungsgebietsauswahl, der ausgewählten Erfassungsqualitätsangabe, eines ausgewählten Benachrichtigungstyps und der ausgewählten Verfolgungsangabe bezüglich identifizierter Objekte,
- der Erfassungs-Edge-Server (440) führt ein aktives Verzeichnis der Fähigkeiten der erfassungsfähigen oder erfassungsbefähigten Entitäten oder Funktionalitäten (111, 112, 20, 21) und ihrer Erfassungsumgebung, insbesondere der abgedeckten Erfassungsgebiete und/oder der momentanen Erfassungsfähigkeiten,
- der Erfassungs-Edge-Server (440) passt Erfassungsinformationen von verknüpften erfassungsfähigen oder erfassungsbefähigten Entitäten oder Funktionalitäten (111, 112, 20, 21) gemäß vereinbarten Forderungen des Erfassungsanwendungsservers (460) an,
- der Erfassungs-Edge-Server (440) führt eine Erfassungsgebietsauswahl und/oder eine Auswahl der erfassungsfähigen oder erfassungsbefähigten Entitäten oder Funktionalitäten (111, 112, 20, 21) und/oder eine Erfassungsqualitätsauswahl und/oder eine Neu-Negoziierung und Aktualisierung von Erfassungsparametern durch.

5. Verfahren nach einem der vorangehenden Ansprüche, wobei die Erfassungsinferenzdaten (430) der ersten Stufe mindestens eines von Folgendem umfassen:
- radarartige Bilder, insbesondere in einem relativen Koordinatensystem,
- Elemente mit signifikanten Erfassungsinformationen,
- weitere Informationen, die während einer lokalen Analyse in den ersten und zweiten erfassungsfähigen oder erfassungsbefähigten Entitäten oder Funktionalitäten (111, 20, 112, 21) verfügbar sind, insbesondere Geschwindigkeitsangaben, insbesondere aus Dopplermessungen, Entfernungsauflösung, Winkelauflösung und Kanalbeobachtungen inferiert,
- Zeitsequenzierung von statischen Bildern, insbesondere zeitgestempelten Bild-Streams, insbesondere radarartigen Bildern,
- einen Vektor von Merkmalen bezüglich mindestens eines Teils der radarartigen Bilder, wobei der Vektor von Merkmalen insbesondere Daten umfasst bezüglich
- der Intensität des empfangenen Signals,
- der aus Dopplermessungen inferierten relativen Geschwindigkeit, und/oder
- einer Selbstbeurteilungsinformation bezüglich einer oder mehrerer der inferierten Eigenschaften auf der Grundlage der jeweiligen erfassungsfähigen oder erfassungsbefähigten Entität oder Funktionalität (111, 20, 112, 21),
wobei insbesondere der Erfassungs-Edge-Server (440) sowohl einen ersten Inferenzschritt (441) als auch einen zweiten Inferenzschritt (442) durchführt, wobei die Erfassungsinferenzdaten (450) der zweiten Stufe dem Ergebnis des zweiten Inferenzschrittes (442) entsprechen, wobei insbesondere der erste Inferenzschritt (441) das Transformieren der Erfassungsinferenzdaten (430) in ein allgemeines Koordinatensystem oder in ein absolutes Koordinatensystem impliziert, insbesondere eine Transformation von lokalen Informationen in das allgemeine Koordinatensystem oder in das absolute Koordinatensystem, wobei insbesondere der zweite Inferenzschritt (442) impliziert, dass der Erfassungs-Edge-Server (440) Objekte identifiziert und Objektinformationen, insbesondere definierte Daten auf Objektebene, insbesondere in einem definierten Format, bevorzugt unter Verwendung von JavaScript Object Notation, JSON, bereitstellt.

6. Verfahren nach einem der vorangehenden Ansprüche, wobei die Erfassungsinferenzdaten (450) der zweiten Stufe durch den Erfassungs-Edge-Server (440) gesendet und durch den Erfassungsanwendungsserver (460) empfangen werden,
unter Implizieren einer Anwendungsprogrammierschnittstelle, insbesondere gemäß mindestens einem von Folgendem:
- einer Representational State Transfer, REST, -Anwendungsprogrammierschnittstelle, insbesondere in dem Fall, dass der Erfassungs-Edge-Server (440) einmalige Erfassungsinformationen von den erfassungsfähigen oder erfassungsbefähigten Entitäten oder Funktionalitäten (111, 20, 112, 21) anfordert,
- einer Publikations-Subskriptions-Anwendungsprogrammierschnittstelle, insbesondere unter Verwendung von WebSocket, MQ-Telemetrietransport, MQTT, insbesondere in dem Fall, dass der Erfassungs-Edge-Server (440) und die erfassungsfähigen oder erfassungsbefähigten Entitäten oder Funktionalitäten (111, 20, 112, 21) gemäß dem Betrieb im periodischen Modus kommunizieren,
- einer Stream-basierten Anwendungsprogrammierschnittstelle, insbesondere in dem Fall, dass der Erfassungs-Edge-Server (440) und die erfassungsfähigen oder erfassungsbefähigten Entitäten oder Funktionalitäten (111, 20, 112, 21) gemäß dem Betrieb im kontinuierlichen Modus kommunizieren.

7. System, umfassend ein Mobilkommunikationsnetz (100), um mindestens einen erfassungsbezogenen Dienst mittels des Verarbeitens erfassungsbezogener Daten bereitzustellen, die innerhalb oder als Teil eines Mobilkommunikationsnetzes (100) generiert werden, wobei das Mobilkommunikationsnetz (100) mindestens eine erste erfassungsfähige oder erfassungsbefähigte Entität oder Funktionalität (111, 20) und eine zweite erfassungsfähige oder erfassungsbefähigte Entität oder Funktionalität (112, 21) umfasst,
und wobei das Mobilkommunikationsnetz (100) mindestens einen Erfassungs-Edge-Server (440) und mindestens einen Erfassungsanwendungsserver (460) umfasst oder diesen zugeordnet oder zugewiesen ist,
wobei die mindestens eine erfassungsfähige oder erfassungsbefähigte Entität oder Funktionalität (111, 20) ein Hochfrequenz-Erfassungssignal (410) sendet, wobei, als ein Ergebnis des Sendens des Hochfrequenz-Erfassungssignals (410), ein Hochfrequenz-Erfassungsempfangssignal (420) entweder durch die erste erfassungsfähige oder erfassungsbefähigte Entität oder Funktionalität (111) oder die zweite erfassungsfähige oder erfassungsbefähigte Entität oder Funktionalität (112) oder beide empfangen wird, wobei mittels des Hochfrequenz-Erfassungsempfangssignals (420) Informationen über die Umgebung der ersten und/oder zweiten erfassungsfähigen oder erfassungsbefähigten Entitäten oder Funktionalitäten (111, 112) als Erfassungsinferenzdaten (430) der ersten Stufe gesammelt werden können,
wobei die Erfassungsinferenzdaten (430) der ersten Stufe dem mindestens einen Erfassungs-Edge-Server (440) zum Generieren von Erfassungsinferenzdaten (450) der zweiten Stufe bereitgestellt werden, und wobei die Erfassungsinferenzdaten (450) der zweiten Stufe dem mindestens einen Erfassungsanwendungsserver (460) zum Bereitstellen von erfassungsbezogenen Diensten und/oder Generieren von Erfassungsanwendungsdaten Erfassungsinferenzdaten werden, wobei, um mindestens einen erfassungsbezogenen Dienst bereitzustellen, das System, das ein Mobilkommunikationsnetz (100) umfasst, so eingerichtet ist, dass:
- der mindestens eine Erfassungs-Edge-Server (440) von dem mindestens einen Erfassungsanwendungsserver (460) eine Anforderungsnachricht bezüglich des mindestens einen erfassungsbezogenen Dienstes empfängt,
- der mindestens eine Erfassungs-Edge-Server (440) an den mindestens einen Erfassungsanwendungsserver (460) eine Antwortnachricht bezüglich des mindestens einen erfassungsbezogenen Dienstes sendet, wobei die Antwortnachricht als ihren Antwortinhalt eine Bestätigung oder eine Ablehnung oder eine Modifizierung des angeforderten erfassungsbezogenen Dienstes umfasst,
**dadurch gekennzeichnet, dass** die Anforderungsnachricht bezüglich des mindestens einen erfassungsbezogenen Dienstes und/oder die Antwortnachricht bezüglich des mindestens einen erfassungsbezogenen Dienstes sich auf anwendungsgetriebene Aufgaben, die durch den Erfassungs-Edge-Server (440) durchgeführt werden, bezieht oder diese realisiert, wobei der Erfassungs-Edge-Server (440) den Erfassungsressourcenbedarf im Verhältnis zum Kommunikationsressourcenbedarf berücksichtigt und Ressourcen des Mobilkommunikationsnetzes (100), die zum Erfassen verwendet werden, im Hinblick auf verfügbare Netzressourcen und im Hinblick auf einen Kommunikationsressourcenbedarf steuert.

8. Erfassungs-Edge-Server (440) als Teil eines Systems, das ein Mobilkommunikationsnetzes (100) nach Anspruch 7 umfasst, zum Bereitstellen mindestens eines erfassungsbezogenen Dienstes mittels Verarbeiten erfassungsbezogener Daten, die innerhalb oder als Teil eines Mobilkommunikationsnetzes (100) generiert werden, wobei der Erfassungs-Edge-Server (440) mit mindestens einer erfassungsfähigen oder erfassungsbefähigten Entität oder Funktionalität (111, 20, 112, 21) kommuniziert, wobei, um mindestens einen erfassungsbezogenen Dienst bereitzustellen, der Erfassungs-Edge-Server (440) so eingerichtet ist, dass:
- der mindestens eine Erfassungs-Edge-Server (440) von dem mindestens einen Erfassungsanwendungsserver (460) eine Anforderungsnachricht bezüglich des mindestens einen erfassungsbezogenen Dienstes empfängt,
- der mindestens eine Erfassungs-Edge-Server (440) an den mindestens einen Erfassungsanwendungsserver (460) eine Antwortnachricht bezüglich des mindestens einen erfassungsbezogenen Dienstes sendet, wobei die Antwortnachricht als ihren Antwortinhalt eine Bestätigung oder eine Ablehnung oder eine Modifizierung des angeforderten erfassungsbezogenen Dienstes umfasst,
**dadurch gekennzeichnet, dass** die Anforderungsnachricht bezüglich des mindestens einen erfassungsbezogenen Dienstes und/oder die Antwortnachricht bezüglich des mindestens einen erfassungsbezogenen Dienstes sich auf anwendungsgetriebene Aufgaben, die durch den Erfassungs-Edge-Server (440) durchgeführt werden, bezieht oder diese realisiert, wobei der Erfassungs-Edge-Server (440) den Erfassungsressourcenbedarf im Verhältnis zum Kommunikationsressourcenbedarf berücksichtigt und Ressourcen des Mobilkommunikationsnetzes (100), die zum Erfassen verwendet werden, im Hinblick auf verfügbare Netzressourcen und im Hinblick auf einen Kommunikationsressourcenbedarf steuert.

9. Programm, umfassend einen computerlesbaren Programmcode, der, wenn er auf einem Computer und/oder in einer erfassungsfähigen oder erfassungsbefähigten Entität oder Funktionalität (111, 20, 112, 21) und/oder in einem Erfassungs-Edge-Server (440) und/oder in einem Erfassungsanwendungsserver (460) oder teilweise in einer erfassungsfähigen oder erfassungsbefähigten Entität oder Funktionalität (111, 20, 112, 21) und/oder teilweise in einem Erfassungs-Edge-Server (440) und/oder teilweise in einem Erfassungsanwendungsserver (460) ausgeführt wird, den Computer und/oder die erfassungsfähige oder erfassungsbefähigte Entität oder Funktionalität (111, 20, 112, 21) und/oder den Erfassungs-Edge-Server (440) und/oder den Erfassungsanwendungsserver (460) veranlasst, ein Verfahren nach einem der Ansprüche 1 bis 6 durchzuführen.

10. Computerlesbares Medium, umfassend Instruktionen, die, wenn sie auf einem Computer und/oder in einer erfassungsfähigen oder erfassungsbefähigten Entität oder Funktionalität (111, 20, 112, 21) und/oder in einem Erfassungs-Edge-Server (440) und/oder in einem Erfassungsanwendungsserver (460) oder teilweise in einer erfassungsfähigen oder erfassungsbefähigten Entität oder Funktionalität (111, 20, 112, 21) und/oder teilweise in einem Erfassungs-Edge-Server (440) und/oder teilweise in einem Erfassungsanwendungsserver (460) ausgeführt werden, den Computer und/oder die erfassungsfähige oder erfassungsbefähigte Entität oder Funktionalität (111, 20, 112, 21) und/oder den Erfassungs-Edge-Server (440) und/oder den Erfassungsanwendungsserver (460) veranlassen, ein Verfahren nach einem der Ansprüche 1 bis 6 durchzuführen.

## Revendications

1. Procédé de fourniture d'au moins un service lié à la détection au moyen du traitement de données liées à la détection qui sont générées au sein ou dans le cadre d'un réseau de communication mobile (100),
dans lequel le réseau de communication mobile (100) comprend au moins une première entité ou fonctionnalité (111, 20) capable de détection ou adaptée à la détection et une seconde entité ou fonctionnalité (112, 21) capable de détection ou adaptée à la détection, et dans lequel le réseau de communication mobile (100) comprend ou est associé ou affecté à au moins un serveur de périphérie de détection (440) et au moins un serveur d'application de détection (460),
dans lequel l'au moins une entité ou fonctionnalité (111, 20) capable de détection ou adaptée à la détection transmet un signal de détection radiofréquence (410),
dans lequel, suite à la transmission du signal de détection radiofréquence (410), un signal de réception de détection radiofréquence (420) est reçu soit par la première entité ou fonctionnalité (111) capable de détection ou adaptée à la détection, soit par la seconde entité ou fonctionnalité (112) capable de détection ou adaptée à la détection, soit par les deux, dans lequel, au moyen du signal de réception de détection radiofréquence (420), des informations sur l'environnement des première et/ou seconde entités ou fonctionnalités (111, 112) capables de détection ou adaptées à la détection peuvent être recueillies en tant que données d'inférence de détection de première phase (430),
dans lequel les données d'inférence de détection de première phase (430) sont fournies à l'au moins un serveur périphérique de détection (440) pour générer des données d'inférence de détection de seconde phase (450), et dans lequel les données d'inférence de détection de seconde phase (450) sont fournies à l'au moins un serveur d'application de détection (460) pour fournir des services liés à la détection et/ou pour générer des données d'application de détection,
dans lequel, afin de fournir au moins un service lié à la détection, le procédé comprend les étapes suivantes :
- dans une première étape, l'au moins un serveur périphérique de détection (440) reçoit, à partir de l'au moins un serveur d'application de détection (460), un message de demande concernant l'au moins un service lié à la détection,
- dans une seconde étape, l'au moins un serveur périphérique de détection (440) transmet à l'au moins un serveur d'application de détection (460) un message de réponse concernant l'au moins un service lié à la détection, dans lequel le message de réponse comprend, comme contenu de réponse, un accusé de réception, un rejet ou une modification du service lié à la détection demandé,
**caractérisé en ce que** le message de demande concernant l'au moins un service lié à la détection et/ou le message de réponse concernant l'au moins un service lié à la détection concerne ou réalise des tâches pilotées par l'application qui sont exécutées par le serveur périphérique de détection (440), dans lequel le serveur périphérique de détection (440) prend en compte la demande de ressources de détection par rapport à la demande de ressources de communication et commande des ressources du réseau de communication mobile (100) utilisées pour la détection en fonction des ressources de réseau disponibles et de la demande de ressources de communication.

2. Procédé selon la revendication 1, dans lequel, après la transmission du message de réponse concernant l'au moins un service lié à la détection, dans la seconde étape et par l'au moins un serveur périphérique de détection (440), l'au moins un serveur périphérique de détection (440) transmet, à l'au moins un serveur d'application de détection (460), au moins un autre message de réponse concernant l'au moins un service lié à la détection, dans lequel l'autre message de réponse comprend un contenu de réponse différent de celui du message de réponse.

3. Procédé selon l'une des revendications précédentes, dans lequel le message de demande concernant l'au moins un service lié à la détection, reçu par le serveur périphérique de détection (440) à partir de l'au moins un serveur d'application de détection (460), comprend au moins l'un parmi :
- une sélection de la zone de détection,
- une indication de qualité de détection,
- une sélection des entités ou de fonctionnalités capables de détection ou adaptées à la détection (111, 112, 20, 21),
- une notification de détermination d'objets,
- une indication de suivi concernant des objets identifiés,
- une mise à jour et/ou une renégociation de paramètres de détection.

4. Procédé selon l'une des revendications précédentes, dans lequel le message de demande concernant l'au moins un service lié à la détection et/ou le message de réponse et/ou l'autre message de réponse concernant l'au moins un service lié à la détection concerne ou réalise des tâches pilotées par l'application qui sont effectuées par le serveur périphérique de détection (440), en particulier par le serveur d'application de détection (460) et/ou motivées par des changements, des capacités ou des demandes dans l'environnement radio et/ou dans l'environnement des entités ou fonctionnalités capables de détection ou adaptées à la détection (111, 112, 20, 21),
dans lequel, en particulier, les tâches pilotées par l'application qui sont effectuées par le serveur périphérique de détection (440) comprennent au moins l'un parmi :
- le serveur périphérique de détection (440) tient un répertoire actif d'informations de détection concernant des messages de demande reçus par l'au moins un serveur d'application de détection (460), en particulier en ce qui concerne au moins l'un parmi : la sélection de la zone de détection sélectionnée, l'indication de qualité de détection sélectionnée, le type de notification, et l'indication de suivi sélectionnée concernant des objets identifiés,
- le serveur périphérique de détection (440) tient un répertoire actif de capacités des entités ou fonctionnalités (111, 112, 20, 21) capables de détection ou adaptées à la détection et de leur environnement de détection, en particulier les zones de détection couvertes et/ou les capacités de détection actuelles,
- le serveur périphérique de détection (440) adapte des informations de détection provenant d'entités ou de fonctionnalités connexes (111, 112, 20, 21) capables de détection ou adaptées à la détection, en fonction de demandes convenues du serveur d'application de détection (460),
- le serveur périphérique de détection (440) effectue une sélection de zone de détection et/ou une sélection des entités ou fonctionnalités (111, 112, 20, 21) capables de détection ou adaptées à la détection et/ou une sélection de qualité de détection et/ou une renégociation et une mise à jour de paramètres de détection.

5. Procédé selon l'une des revendications précédentes, dans lequel les données d'inférence de détection de première phase (430) comprennent au moins l'un parmi :
- des images de type radar, en particulier dans un système de coordonnées relatives,
- des éléments avec des informations de détection significatives,
- d'autres informations disponibles au cours de l'analyse locale au niveau des première et seconde entités ou fonctionnalités (111,20, 112, 21) capables de détection ou adaptées à la détection, en particulier des indications de vitesse, notamment déduites de mesures Doppler, la résolution de la portée, la résolution angulaire, et des observations des canaux,
- le séquençage temporel d'images statiques, en particulier des flux d'images horodatées, notamment d'images de type radar,
- un vecteur de caractéristiques concernant au moins une partie des images de type radar, le vecteur de caractéristiques comprenant en particulier des données concernant
- l'intensité du signal reçu,
- la vitesse relative dérivée de mesures Doppler et/ou
- une information d'auto-évaluation concernant une ou une pluralité des propriétés déduites sur la base de l'entité ou de la fonctionnalité capable de détection ou adaptée à la détection respective (111, 20, 112, 21),
dans lequel en particulier, le serveur périphérique de détection (440) effectue à la fois une première étape d'inférence (441) et une seconde étape d'inférence (442), dans lequel les données d'inférence de détection de seconde phase (450) correspondent au résultat de la seconde étape d'inférence (442),
dans lequel en particulier, la première étape d'inférence (441) implique la transformation des données d'inférence de détection (430) en un système de coordonnées générales ou en un système de coordonnées absolues, en particulier la transformation d'informations locales en système de coordonnées générales ou en système de coordonnées absolues,
dans lequel en particulier, la seconde étape d'inférence (442) implique que le serveur périphérique de détection (440) identifie des objets et fournisse des informations sur les objets, en particulier des données définies au niveau des objets, en particulier dans un format défini, de préférence en utilisant la notation d'objet JavaScript, JSON.

6. Procédé selon l'une des revendications précédentes, dans lequel les données d'inférence de détection de seconde phase (450) sont transmises par le serveur périphérique de détection (440) et reçues par le serveur d'application de détection (460),
impliquant une interface de programmation d'applications, notamment selon au moins l'une parmi :
- une interface de programmation d'application de transfert d'état représentationnel, REST, en particulier dans le cas où le serveur périphérique de détection (440) demande des informations de détection ponctuelles aux entités ou fonctionnalités (111,20, 112, 21) capables de détection ou adaptées à la détection,
- une interface de programmation d'application de publication-souscription, utilisant notamment le transport de télémétrie MQ, MQTT, WebSocket notamment dans le cas où le serveur périphérique de détection (440) et les entités ou fonctionnalités (111, 20, 112, 21) capables de détection ou adaptées à la détection communiquent selon le fonctionnement en mode périodique,
- une interface de programmation d'application basée sur les flux, en particulier dans le cas où le serveur périphérique de détection (440) et les entités ou fonctionnalités (111, 20, 112, 21) capable de détection ou adaptée à la détection communiquent selon le fonctionnement en mode continu.

7. Système comprenant un réseau de communication mobile (100) pour fournir au moins un service lié à la détection au moyen du traitement de données liées à la détection qui sont générées au sein ou dans le cadre d'un réseau de communication mobile (100), dans lequel le réseau de communication mobile (100) comprend au moins une première entité ou fonctionnalité (111, 20) capable de détection ou adaptée à la détection et une seconde entité ou fonctionnalité (112,21) capable de détection ou adaptée à la détection, et dans lequel le réseau de communication mobile (100) comprend ou est associé ou affecté à au moins un serveur de périphérie de détection (440) et au moins un serveur d'application de détection (460),
dans lequel l'au moins une entité ou fonctionnalité (111,20) capable de détection ou adaptée à la détection transmet un signal de détection radiofréquence (410),
dans lequel, suite à la transmission du signal de détection radiofréquence (410), un signal de réception de détection radiofréquence (420) est reçu soit par la première entité ou fonctionnalité (111) capable de détection ou adaptée à la détection, soit par la seconde entité ou fonctionnalité (112) capable de détection ou adaptée à la détection, soit par les deux, dans lequel, au moyen du signal de réception de détection radiofréquence (420), des informations sur l'environnement des première et/ou seconde entités ou fonctionnalités (111, 112) capables de détection ou adaptées à la détection peuvent être recueillies en tant que données d'inférence de détection de première phase (430),
dans lequel les données d'inférence de détection de première phase (430) sont fournies à l'au moins un serveur périphérique de détection (440) pour générer des données d'inférence de détection de seconde phase (450), et dans lequel les données d'inférence de détection de seconde phase (450) sont fournies à l'au moins un serveur d'application de détection (460) pour fournir des services liés à la détection et/ou pour générer des données d'application de détection, dans lequel, afin de fournir l'au moins un service lié à la détection, le système comprenant un réseau de communication mobile (100) est configuré de telle sorte que :
- l'au moins un serveur périphérique de détection (440) reçoit, à partir de l'au moins un serveur d'application de détection (460), un message de demande concernant l'au moins un service lié à la détection,
- l'au moins un serveur périphérique de détection (440) transmet à l'au moins un serveur d'application de détection (460) un message de réponse concernant l'au moins un service lié à la détection, dans lequel le message de réponse comprend, comme contenu de réponse, un accusé de réception, un rejet ou une modification du service lié à la détection demandé,
**caractérisé en ce que** le message de demande concernant l'au moins un service lié à la détection et/ou le message de réponse concernant l'au moins un service lié à la détection concerne ou réalise des tâches pilotées par l'application qui sont exécutées par le serveur périphérique de détection (440), dans lequel le serveur périphérique de détection (440) prend en compte la demande de ressources de détection par rapport à la demande de ressources de communication et commande des ressources du réseau de communication mobile (100) utilisées pour la détection en fonction des ressources de réseau disponibles et de la demande de ressources de communication.

8. Serveur périphérique de détection (440) faisant partie d'un système comprenant un réseau de communication mobile (100) selon la revendication 7, pour fournir au moins un service lié à la détection au moyen du traitement de données liées à la détection qui sont générées au sein ou dans le cadre d'un réseau de communication mobile (100), dans lequel le serveur périphérique de détection (440) communique avec au moins une entité ou fonctionnalité (111, 20, 112, 21) capable de détection ou adaptée à la détection, dans lequel, afin de fournir au moins un service lié à la détection, le serveur périphérique de détection (440) est configuré de telle sorte que :
- l'au moins un serveur périphérique de détection (440) reçoit, à partir de l'au moins un serveur d'application de détection (460), un message de demande concernant l'au moins un service lié à la détection,
- l'au moins un serveur périphérique de détection (440) transmet à l'au moins un serveur d'application de détection (460) un message de réponse concernant l'au moins un service lié à la détection, dans lequel le message de réponse comprend, comme contenu de réponse, un accusé de réception, un rejet ou une modification du service lié à la détection demandé,
**caractérisé en ce que** le message de demande concernant l'au moins un service lié à la détection et/ou le message de réponse concernant l'au moins un service lié à la détection concerne ou réalise des tâches pilotées par l'application qui sont exécutées par le serveur périphérique de détection (440), dans lequel le serveur périphérique de détection (440) prend en compte la demande de ressources de détection par rapport à la demande de ressources de communication et commande des ressources du réseau de communication mobile (100) utilisées pour la détection en fonction des ressources de réseau disponibles et de la demande de ressources de communication.

9. Programme comprenant un code de programme lisible par ordinateur qui, lorsqu'il est exécuté sur un ordinateur et/ou sur une entité ou une fonctionnalité capable de détection ou adaptée à la détection (111, 20, 112, 21) et/ou sur un serveur périphérique de détection (440) et/ou sur un serveur d'application de détection (460), ou en partie sur une entité ou une fonctionnalité capable de détection ou adaptée à la détection (111, 20, 112, 21) et/ou en partie sur un serveur périphérique de détection (440) et/ou en partie sur un serveur d'application de détection (460), amène l'ordinateur et/ou l'entité ou la fonctionnalité capable de détection ou adaptée à la détection (111, 20, 112, 21) et/ou le serveur périphérique de détection (440) et/ou le serveur d'application de détection (460) à effectuer un procédé selon l'une des revendications 1 à 6.

10. Support lisible par ordinateur comprenant des instructions qui, lorsqu'elles sont exécutées sur un ordinateur et/ou sur une entité ou fonctionnalité (111, 20, 112, 21) capable de détection ou adaptée à la détection et/ou sur un serveur périphérique de détection (440) et/ou sur un serveur d'application de détection (460), ou en partie sur une entité ou fonctionnalité (111, 20, 112, 21) capable de détection ou adaptée à la détection et/ou en partie sur un serveur périphérique de détection (440) et/ou en partie sur un serveur d'application de détection (460), amènent l'ordinateur et/ou l'entité ou fonctionnalité (111, 20, 112, 21) capable de détection ou adaptée à la détection et/ou le serveur périphérique de détection (440) et/ou le serveur d'application de détection (460) à effectuer un procédé selon l'une des revendications 1 à 6.
